(19) **Europäisches Patentamt**
**European Patent Office**
**Office européen des brevets**

(11) **EP 2 250 840 B1**

(12) **EUROPEAN PATENT SPECIFICATION**

(45) Date of publication and mention
of the grant of the patent:
**24.02.2016 Bulletin 2016/08**

(51) Int Cl.:
**H04W 52/12** *(2009.01)*    **H04W 52/14** *(2009.01)*
**H04W 52/24** *(2009.01)*

(21) Application number: **08871950.5**

(22) Date of filing: **28.11.2008**

(86) International application number:
**PCT/SE2008/051376**

(87) International publication number:
**WO 2009/096844 (06.08.2009 Gazette 2009/32)**

(54) **METHOD OF CLOSED LOOP POWER CONTROL ADJUSTED BY SELF-INTERFERENCE AND APPARATUS**

VERFAHREN ZUR LEISTUNGSSTEUERUNG MIT GESCHLOSSENER REGELSCHLEIFE, ANGEPASST AN DIE EIGEN-INTERFERENZ SOWIE VORRICHTUNG

PROCÉDÉ ET APPAREIL DE COMMANDE DE PUISSANCE EN BOUCLE FERMÉE AJUSTÉE PAR AUTOBROUILLAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.01.2008 US 22346**

(43) Date of publication of application:
**17.11.2010 Bulletin 2010/46**

(73) Proprietor: **Telefonaktiebolaget LM Ericsson (publ)**
**164 83 Stockholm (SE)**

(72) Inventors:
• **RAO, Jing**
**SE-19150 Sollentuna (SE)**
• **HE, Ning**
**S-191 34 Sollentuna (SE)**
• **BJÖRKEGREN, Håkan**
**S-187 46 Täby (SE)**
• **EDHOLM, Christer**
**S-187 52 Täby (SE)**
• **TIDESTAV, Claes**
**S-746 31 Bålsta (SE)**

• **BOTTOMLEY, Gregory**
**Cary, North Carolina 27518 (US)**

(74) Representative: **Ericsson**
**Patent Development**
**Torshamnsgatan 21-23**
**164 80 Stockholm (SE)**

(56) References cited:
**EP-A- 1 583 256      WO-A-03/079577**
**WO-A-2009/029031      US-A1- 2004 203 462**

• **QIU X ET AL: "Some performance results for the downlink shared channel in WCDMA" PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 1, 28 April 2002 (2002-04-28), pages 376-380, XP010589520 ISBN: 978-0-7803-7400-3**
• **GREENSTEIN L J ET AL: "Analysis and results for the orthogonality factor in wcdma downlinks" IEEE TRANSACTIONS ON WIRELESS COMMUNICATIONS, IEEE SERVICE CENTER, PISCATAWAY, NJ, US, vol. 2, no. 6, 1 November 2003 (2003-11-01), pages 1138-1149, XP011103216 ISSN: 1536-1276**

**Description**

BACKGROUND

The present invention relates generally to power control for high speed packet data access in mobile communication networks.

The current Universal Mobile Telecommunication System (UMTS) standard implements uplink power control to control the transmit power of mobile terminals on uplink channels. The uplink transmit power control procedure simultaneously controls the power of a Dedicated Physical Control Channel (DPCCH) and its corresponding Dedicated Physical Data Channels (DPDCHs), High Speed Dedicated Physical Control Channel (HS-DPCCH), and Enhanced Dedicated Physical Control and Data Channels (E-DPCCH and E-DPDCH). The power control procedure in UMTS includes inner-loop power control and outer-loop power control. Inner-loop power control compares a signal-to-interference ratio (SIR) of a received signal from a mobile terminal with an SIR target to generate transmit power control (TPC) commands to instruct the mobile terminal to either increase or decrease its transmit power. Outer-loop power control adjusts the SIR target to obtain a certain quality of service (QoS). For example, adjustment of the SIR target may be made to maintain a desired block error rate (BLER).

With higher data rates in the uplink, a higher chip energy-to-noise ratio $(E_c/N_0)$ is needed in order to support the desired throughput. Multi-path propagation in combination with high transmission power $(E_c/N_0 > 0$ dB$)$ may cause severe self-interference that, in some cases, dominates other interference in the received signal and degrades the overall performance of the mobile terminal. When self-interference is dominant, the received SIR may not be able to reach the SIR target, irrespective of the mobile terminal transmit power because increasing the transmit power also increases the self-interference. In this scenario, inner-loop power control continues to ask the mobile terminal to increase its transmit power, and this leads to undesirable power rush, possible system instability, and serious interference that affects other users' performance.

One possible solution to this problem is to exclude self-interference from the SIR estimation process. For example, an interference suppression receiver, such as a GRAKE receiver, may be used to suppress self-interference when demodulating the received signal. SIR may then be estimated after GRAKE combining. This method has the advantage of being straightforward and the estimated SIR reflects the actual SIR experienced by the modem. However, using an interference suppression receiver to suppress self-interference may not be sufficient to avoid power rushes at high data rates.

Another possible solution is to compute a modified SIR that excludes self-interference and to use the modified SIR for inner-loop power control. The TPC commands are then generated based on the relation between the modified SIR, with self-interference excluded, and the SIR target. However, there is always some residual self-interference that cannot be removed. Further, it may be difficult to accurately estimate the modified SIR at high data rates. Moreover, signal quality is actually affected by self-interference even if the self-interference is discounted when computing the SIR. Removing the effect of self-interference from the SIR estimate results in worse signal quality for a given SIR target and causes the outer-loop power control to compensate for the self-interference.

Another possible solution is to take self-interference into account when determining the data transmission rates for the mobile terminal. When self-interference is dominant, the uplink scheduler may avoid scheduling high data rate transmissions. However, there is an inherent delay in the scheduling process. Consequently, the scheduler cannot respond quickly enough to rapidly changing channel conditions.

Document EP1583256 disclose a method to pause normal outer loop power control when a value of SIR$_{error}$ exceeds a predetermined threshlod.

SUMMARY

The present invention relates to a method of closed loop power control that takes into account the level of self-interference in the receive signal when generating power control commands. When the level of self-interference is low, a normal inner-loop power control procedure may be used wherein the signal-to-interference ratio (SIR) of the receive signal is compared to an SIR target to generate power control commands. When the level of self-interference is high, a "fast break" procedure is used for inner-loop power control to constrain further increases in mobile terminal transmit power until the level of self-interference returns to an acceptable level. The "fast break" procedure may reduce the mobile station transmit power, maintain the mobile station transmit power at current levels, or limit further increases in the mobile terminal transmit power. In some embodiments, the SIR target set by outer-loop power control may be modified when the level of self-interference is high to prevent power rushes. Also, the level of self-interference may be provided to an uplink scheduler so that the scheduler may avoid scheduling high data rate transmissions while the level of self-interference is high.

By introducing a "fast break" procedure into inner-loop power control when the level of self-interference is high, power rushes and possible system instability are avoided.

BRIEF DESCRIPTION OF THE DRAWINGS

Fig. 1 is schematic diagram of a mobile communication network.
Fig. 2 is a graph illustrating the relationship between signal-to-interference ratio (SIR) and a modified signal-to-interference ratio (MSIR) with self-interference suppressed.
Fig. 3 is a flow diagram of an exemplary inner-loop power control procedure.
Fig. 4 is a flow diagram of an exemplary inner-loop power control procedure.
Fig. 5 is a block diagram of an exemplary base station in a mobile communication network.
Fig. 6 is a block diagram of an exemplary power control unit for a base station in a mobile communication network.

DETAILED DESCRIPTION

Referring now to the drawings, the present invention will be described in the context of a Third Generation (3G) mobile communication network, such as a UMTS network. Those skilled in the art will appreciate, however, that the present invention is applicable to systems implementing other standards. Therefore, the description should not be construed as limiting the present invention to UMTS networks.

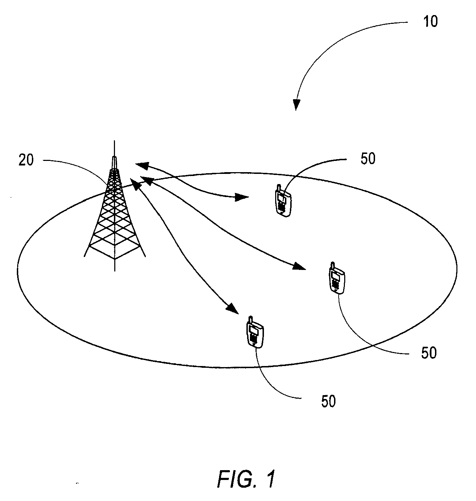

Fig. 1 presents a simplified illustration of a mobile communication network 10 for supporting wireless communications by a plurality of mobile terminals 50. While Fig. 1 shows a single base station 20 communicating with the mobile terminals 50, those skilled in the art will appreciate that a typical communication network 10 comprises many base stations 20. The base station 20 transmits data to the mobile terminals 50 over one or more downlink channels, and receives data from the mobile terminals 50 over one or more uplink channels. The downlink and uplink channels may comprise dedicated channels, common channels, or a mixture thereof. In the current release of the UMTS standard, the physical channels for the uplink include the dedicated physical control channel (DPCCH), the dedicated physical data channel (DPDCH), the enhanced dedicated physical control channel (E-DPCCH), the enhanced dedicated physical data channel (E-DPDCH), and the high-speed dedicated physical control channel (HS-DPCCH).

Base station 20 simultaneously controls the transmit power of the mobile terminals 50 on the DPCCH, DPDCH, E-DPCCH, E-DPDCH, and HS-DPCCH. An inner power control loop sets the transmit power of the mobile terminals 50 on the DPCCH by comparing the signal-to-interference ratio (SIR) of the received DPCCH signal to an SIR target. The SIR target is set by outer-loop power control and can be driven by the block error rate (BLER) on the DPDCH, or the number of retransmissions of the E-DPDCH. The mobile terminal transmit power on the DPDCH, E-DPCCH, E-DPDCH, and HS-DPCCH are set relative to the transmit power of the DPCCH. Thus, a single power control mechanism controls the transmit power of the mobile terminal 50 on all of the uplink physical channels.

The SIR on the DPCCH may be modeled by:

$$SIR = \frac{E_c}{I_{ISI} + I_{other} + N_0} , \qquad \text{Eq. 1}$$

where $E_c$ is the chip energy, $I_{ISI}$ is intersymbol interference (e.g., self-interference), $I_{other}$ is interference from other users, and $N_0$ is thermal noise. A modified SIR, denoted herein as MSIR, is the SIR with self-interference suppressed and is given by:

$$MSIR = \frac{E_c}{I_{other} + N_0} . \qquad \text{Eq. 2}$$

The orthogonality factor $\alpha$ indicates how much self-interference (e.g., $I_{ISI}$) will be introduced when a signal is transmitted over a dispersive channel. The computation of the orthogonality factor $\alpha$ is described below. The orthogonality factor $\alpha$ is a number in the range of 0 to 1, where 0 indicates no self-interference and 1 indicates the maximum self-interference. Eq. 1 may be rewritten in terms of the orthogonality factor $\alpha$ as:

$$SIR = \frac{E_c}{\alpha \cdot E_c + I_{other} + N_0} \, . \qquad \text{Eq. 3}$$

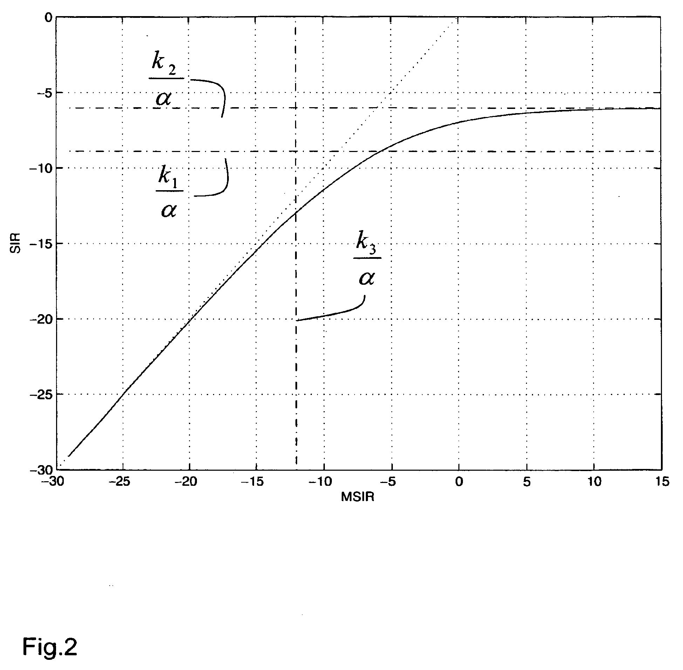

Fig. 2 illustrates the relationship between SIR and MSIR with a given orthogonality factor $\alpha$, $I_{other}$ and $N_0$. In theory, the SIR cannot be larger than $\frac{1}{\alpha}$. When a mobile terminal 50 is transmitting at high data rates, multipath propagation may cause severe self-interference, which may disrupt uplink power control. When self-interference dominates other interference in the received signal, further increases in mobile terminal transmit power may not improve the overall SIR due to increased self-interference. In this circumstance, the power control may continue to increase the transmit power of the mobile terminal 50 in a futile attempt to increase the SIR, which leads to an undesirable power rush, possible system instability, and increased interference with other users.

According to embodiments of the present invention, the level of self-interference is taken into account in performing uplink power control. When self-interference is the dominant impairment (dominating the total SIR), the power control command generation is modified to avoid power rushes and system instability. Changes in power control command generation may be accomplished by changing the way the inner-loop power control generates power control commands, and/or by adjusting the SIR target used by inner-loop power control.

The level of self-interference may be determined based on the orthogonality factor $\alpha$. For example, whether the self-interference is dominant may be determined by comparing the estimated SIR to a first threshold $\frac{k_1}{\alpha}$, where 0 < $k_1$ < 1 (e.g., $k_1$ = 0.5). An SIR larger than the first threshold $\frac{k_1}{\alpha}$ may be taken as an indication that self-interference is dominant.

When self-interference dominates the SIR estimate, a power control unit uses a "fast break" procedure for inner-loop power control. Otherwise, normal SIR-based inner-loop power control is used. In one exemplary embodiment, a "fast break" is introduced into the inner-loop power control process to interrupt normal SIR-based power control command generation. In one exemplary embodiment, the inner-loop power control may be configured to reduce or maintain the current transmit power level of the mobile terminal 50, irrespective of the relationship between the received SIR and the SIR target. This procedure effectively decouples the power control command generation from the received SIR.

Various techniques may be used to implement a fast break in the inner-loop power control. In one embodiment, a fast break may be achieved by commanding the mobile terminal 50 to reduce its transmit power even when the SIR is lower than the SIR target. In an alternative embodiment, a "fast break" may be achieved in the inner-loop power control by replacing current SIR estimates with a value that is larger than the SIR target. For example, the current SIR estimate may be replaced with a value that is as high as 10,000 times the current SIR estimate. Replacing the current SIR estimate with a value higher than the SIR target guarantees that the inner-loop power control generates a command to decrease the transmit power.

In other embodiments of the invention, power control command generation may be changed by adjusting the SIR target. Lowering the SIR target causes the inner-loop power control to issue fewer up commands. SIR target adjustment may be used in place of the fast break procedure for inner-loop power control, or in combination with the fast break procedure. For example, SIR target adjustment may be used when the fast break procedure fails to bring the self-interference level down to an acceptable level.

Those skilled in the art will appreciate that both the fast break procedure and the SIR target adjustment procedure causes an increase in the error rate. In this case, a retransmission protocol, such as hybrid ARQ, may be used to request retransmission of erroneously received data blocks. However, this effectively reduces the data throughput because more data blocks will be retransmitted when the fast break procedure or the SIR target adjustment procedure is used.

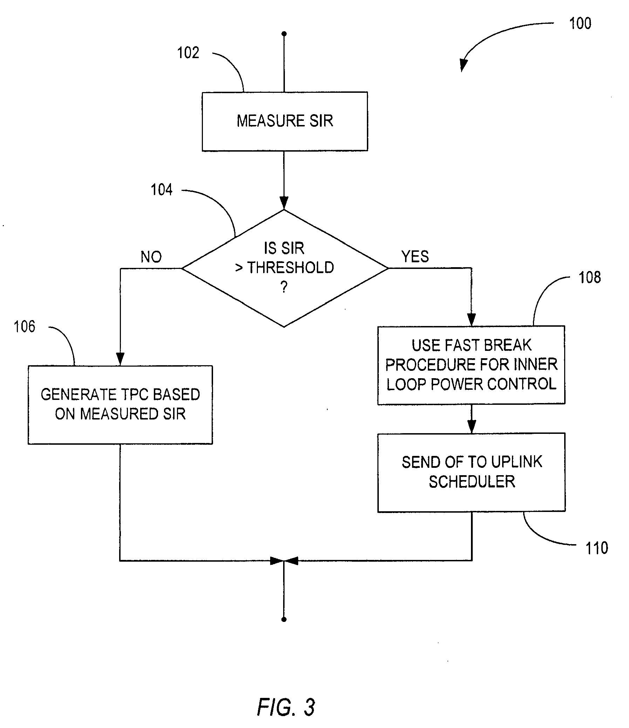

Fig. 3 illustrates an exemplary inner-loop power control process 100 implemented by the base station 20. This process is repeated during each power control interval. The process begins by measuring the SIR of the DPCCH ($SIR_{DPCCH}$) (block 102). After computing the SIR of the received DPCCH signal, the base station 20 determines whether self-interference dominates other interference in the received SIR (block 104). This determination may be made by comparing the measured SIR on the DPCCH to a first threshold $\frac{k_1}{\alpha}$ computed based on the orthogonality factor $\alpha$, where $k_1$ > 0. If self-interference is not dominant, inner-loop power control generates a transmit power control (TPC) command based on the measured SIR on the DPCCH (block 106). More particularly, the measured SIR is compared to the SIR target set by outer-loop power control. If the received SIR is below the SIR target, the inner-loop power control generates a transmit power control (TPC) command instructing the mobile terminal 50 to increase its transmit power. Conversely, if the received SIR is greater than the SIR target, the inner-loop power control generates a TPC command instructing the mobile terminal 50 to decrease its transmit power. Returning to block 104, if self-interference is the dominant interference in the received SIR, inner-loop power control uses an alternative "fast break" command generation procedure to generate the TPC commands (block 108). For example, the inner-loop power control may be configured to generate a TPC command instructing the mobile terminal 50 to reduce its transmit power regardless of the relationship between the SIR and SIR target. Alternatively, the inner-loop power control may be configured to generate alternating TPC commands to maintain the current transmit power level of the mobile terminal 50. Other "fast break" procedures may also be used.

In some embodiments, an uplink scheduler at the base station 20 may be prevented from scheduling high data rate transmissions by the mobile terminal 50 when self-interference dominates the SIR. In this case, the orthogonality factor may be provided to the scheduler so that the scheduler may take the level of self-interference into account when scheduling data rates for the mobile terminal 50 (block 110). In general, the scheduler should not schedule high data rate transmissions when the orthogonality factor $\alpha$ is high. Because there is an inherent delay in the scheduling process, the scheduler may be configured to filter the orthogonality factor $\alpha$ over a predetermined time interval, and to use the filtered value to make scheduling decisions rather then rely on the instantaneous value for the orthogonality factor $\alpha$. The inner-loop power control may optionally provide the orthogonality factor $\alpha$ to an uplink scheduler so that the scheduler will not schedule high rate data transmissions while self-interference is dominant (block 110).

As previously noted, the SIR cannot, in theory, increase beyond $\dfrac{1}{\alpha}$. When the outer-loop power control sets the SIR target greater than $\dfrac{1}{\alpha}$ due to the channel conditions, the inner-loop power control continues to increase the transmit power of the mobile terminal 50. To avoid this potential problem, the "fast break procedure" may also be used for inner-loop power control when the SIR target exceeds a second predetermined threshold denoted herein as $\dfrac{k_2}{\alpha}$, where $k_2$ is a number between 0 and 1. Alternatively, or in addition, the outer-loop power control may lower the SIR target until the channel conditions improve, and then resume normal outer-loop power control.

In some embodiments, the MSIR may be used in place of SIR for inner-loop power control. For example, the procedure shown in Fig. 3 may be implemented using MSIR instead of SIR for normal inner-loop power control. In this case, the MSIR is compared to the SIR target set by the outer-loop power control. In other embodiments, the MSIR may be measured and compared to a third threshold denoted herein as $\dfrac{k_3}{\alpha}$, where $k_3$ is a number greater than 0. The base station 20 may use the measured SIR for inner-loop power control when the MSIR is less than the third threshold, and use the MSIR for inner-loop power control when the MSIR exceeds the third threshold.

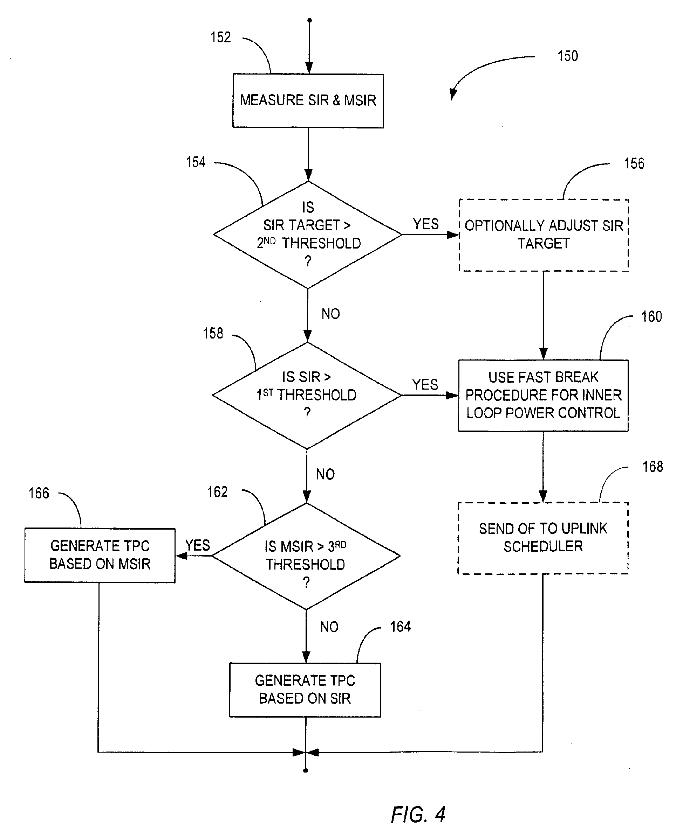

Fig. 4 illustrates an exemplary inner-loop power control process 150 that considers the current SIR target, the SIR, and the MSIR in generating power control commands. This process may be repeated during each power control interval. The process begins by measuring the SIR and MSIR of the DPCCH ($SIR_{DPCCH}$ and $MSIR_{DPCCH}$) (block 152). After computing the SIR and MSIR, base station 20 determines whether the current SIR target set by the outer-loop power control exceeds the second threshold (block 154). If so, the base station 20 uses the "fast break" procedure for inner-loop power control (block 160). The base station 20 may also optionally adjust the SIR target (block 156) and/or provide the orthogonality factor $\alpha$ to the uplink scheduler (block 168). If the SIR target is below the second threshold, the base station 20 determines whether self-interference dominates other interference in the received SIR (block 158). This determination may be made by comparing the measured SIR on the DPCCH to a first threshold. If self-interference is dominant, the fast break procedure is used for inner-loop power control (block 160). The base station 20 may also optionally provide the orthogonality factor $\alpha$ to the uplink scheduler (block 168). If self-interference is not dominant, the base station 20 compares the measured MSIR to the third threshold (block 162). The inner-loop power control generates a transmit power control (TPC) command based on the measured SIR on the DPCCH if the MSIR is less than or equal to the third threshold (block 164), and uses the MSIR for inner-loop power control when the MSIR exceeds the third threshold (block 166).

The orthogonality factor $\alpha$ may be estimated from the channel estimates and combining weights computed by a GRAKE receiver. In a GRAKE receiver, the combining weights may be computed according to:

$$\mathbf{w} = \hat{\mathbf{R}}^{-1}\hat{\mathbf{h}} \, ,\qquad\qquad \text{Eq. 4}$$

where h is the net channel response vector corresponding to the DPCCH and $\hat{\mathbf{R}}$ is an impairment covariance matrix. The impairment covariance matrix $\hat{\mathbf{R}}$ in Eq. 4 may be computed according to:

$$\hat{\mathbf{R}} = f_1 \mathbf{R}_{ISI}\left(\hat{\mathbf{g}}\right) + f_2 \mathbf{R}_n \, ,\qquad\qquad \text{Eq. 5}$$

where $\hat{\mathbf{R}}_{ISI}$ is a matrix of parametrically-estimated self-interference impairment correlations representing the covariance of the intersymbol interference (ISI), $\mathbf{R}_n$ is a matrix representing the covariance of the thermal noise and other user interference, $\hat{\mathbf{g}}$ is the medium channel response estimate corresponding to the DPCCH, and the parameters $f_1$ and $f_2$ are fitting parameters related to the base station transmit power and noise power respectively. In one exemplary embodiment, $f_1 = E_C / E_P$ and $f_2 = N_0$, ignoring other user interference for simplicity, where $E_C$ is the transmit power (energy per chip), $E_P$ is pilot symbol energy, and No is thermal noise and other user interference power.

In a GRAKE receiver, the SIR of the received signal on the DPCCH may be computed according to:

$$SIR = \frac{\left(\mathbf{w}^H\hat{\mathbf{h}}\right)^2}{f_1\mathbf{w}^H\hat{\mathbf{R}}_{ISI}(\hat{\mathbf{g}})\mathbf{w} + f_2\mathbf{w}^H\mathbf{R}_n\mathbf{w}} \, .\qquad\qquad \text{Eq. 6}$$

The orthogonality factor $\alpha$ may then be estimated according to:

$$\hat{\alpha} = \frac{f_1\mathbf{w}^H\hat{\mathbf{R}}_{ISI}(\hat{\mathbf{g}})\mathbf{w}}{\left(\mathbf{w}^H\hat{\mathbf{h}}\right)^2} \, .\qquad\qquad \text{Eq. 7}$$

The quantities in Eqs. 6 and 7 may be computed using the parameter estimation portion of a parametric GRAKE as described in G. E. Bottomley, T. Ottosson and Y. E. Wang, A generalized RAKE Receiver for Interference Suppression, IEEE Journal on Selected Areas in Communications, vol.18, no.8, Aug 2000 (Bottomley et al) and in U.S. Published Application No. 2005/0201447 titled "Method and apparatus for parameter estimation in a generalized RAKE receiver", both of which are incorporated herein by reference.

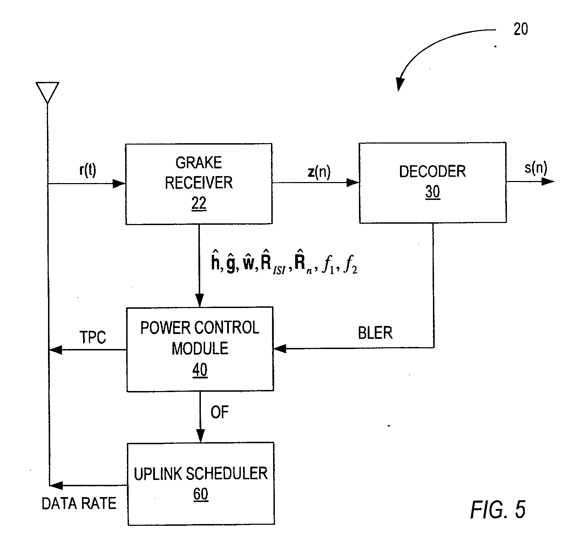

The SIR estimate given by Eq. 6 may be used for inner-loop power control as previously described by comparing the SIR estimate to an SIR target. The outer-loop power control module sets the SIR target in a conventional manner based on the block error rate (BLER) or frame error rate (FER) provided by a decoder 30 (Fig. 5).

If MSIR is used instead of SIR for inner-loop power control, the first term in the denominator in Eq. 6 is dropped and the MSIR may be computed according to:

$$MSIR = \frac{\left(\mathbf{w}^H\hat{\mathbf{h}}\right)^2}{f_2\mathbf{w}^H\mathbf{R}_n\mathbf{w}} \, .\qquad\qquad \text{Eq. 8a}$$

An alternate method to estimate MSIR is to use a non-parametric approach. In the non-parametric approach, $\hat{\mathbf{R}}$ is the non-parametric full or overall impairment correlation estimate. In the non-parametric approach Eq.8a is modified as follows:

$$MSIR = \frac{\mathbf{w}^H\left(\hat{\mathbf{R}} - f_1\hat{\mathbf{R}}_{ISI}\right)\mathbf{W}}{f_2\mathbf{w}^H\mathbf{R}_n\mathbf{w}} \, .\qquad\qquad \text{Eq. 8b}$$

The advantage of using this method is that the impact of the other user interference is also taken into account without the need of estimating additional parameters.

Another alternate method to estimate MSIR is based on the instantaneous estimates of SIR and orthogonality factor (OF): In this case, MSIR is given by:

$$MSIR = \frac{E_c}{N_0 + I_{other}} = \frac{E_c}{\frac{E_c}{SIR} - \alpha \cdot E_c} = \frac{1}{\frac{1}{SIR} - \alpha} \qquad \text{Eq.8c}$$

An alternate method for estimating the orthogonality factor is based on a model of the multipath channel. The complex impulse response of the multi-path channel may be described by:

$$h(n) = \sum_{l=1}^{L} \alpha_l \cdot \delta(n - \tau_l). \qquad \text{Eq. 9}$$

The receiver response may be described as:

$$r(n) = \sum_{k=1}^{K} \beta_k \cdot \delta(n - \tau_k'). \qquad \text{Eq. 10}$$

The cascade of the multi-path channel and the receiver becomes:

$$h(n) * r(n) = \sum_{i=1}^{L+K-1} \gamma_i \cdot \delta(n - \tau_i''). \qquad \text{Eq. 11}$$

With that, the orthogonality factor $\alpha$ may be estimated from the cascaded response by:

$$\alpha = \left(\frac{\sum_{i=1}^{L+K-1} \|\gamma_i\|^2}{\|\gamma_d\|^2} - 1\right), \qquad \text{Eq. 12}$$

where $\gamma_d = \sum_{l=\max(1,d-(K-1))}^{\min(L,d)} \alpha_l \cdot \beta_{(1+d)-l}$ and $d = 1 - \tau_1'$. The quantities in Eq. 12 may be obtained from the channel estimates and the combining weights made by any linear receiver, e.g., a parametric or non-parametric GRAKE receiver.

Fig. 5 illustrates an exemplary base station 20 for implementing the power control process as herein described. Base station 20 comprises a Generalized RAKE (GRAKE) receiver 22, decoder 30, power control module 40, and uplink scheduler 60. The received signal r(t) is input to the GRAKE receiver 22. GRAKE receiver 22 may, for example, comprises a parametric GRAKE receiver as described in Bottomley et al and in U.S. Published Patent Application No. 2005/0201447. The GRAKE receiver 22 demodulates the received signal and provides a vector of the received symbol estimates **z** to the decoder 30. During the demodulation process, GRAKE receiver 22 computes various quantities as shown in Eqs. 4 through 7 including the net channel response vector $\hat{\mathbf{h}}$, medium response vector $\hat{\mathbf{g}}$, combining weight vector $\hat{\mathbf{w}}$, interference covariance matrices $\hat{\mathbf{R}}_{ISI}$ & $\hat{\mathbf{R}}_n$, and the fitting parameters $f_1$ and $f_2$. These quantities are provided to the power control module 40. The decoder 30 decodes the received symbols and generates an estimate of the block error rate (BLER), which is also provided to the power control module 40. Based on the input from the GRAKE receiver 22 and the decoder 30, the power control module 40 performs inner-loop and outer-loop power control.

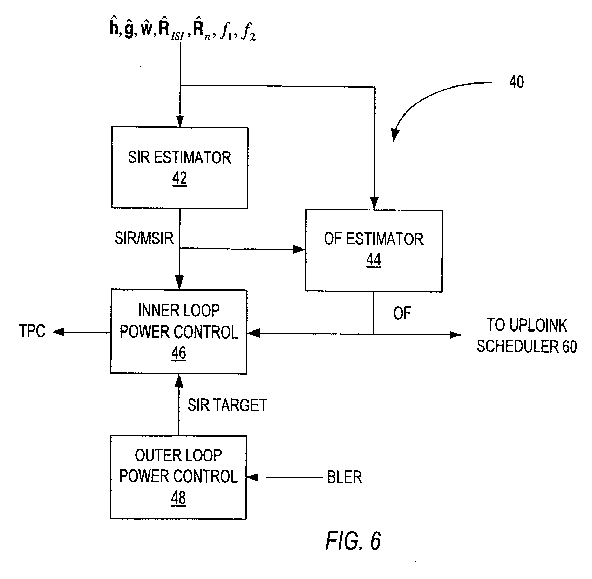

Fig. 6 illustrates the main functional elements of the power control module 40. Power control module 40 comprises an SIR estimator 42, orthogonality factor estimator 44, inner-loop power control unit 46, and outer-loop power control unit 48. The functional elements shown in Fig. 6 may be implemented by one or more processors. The SIR estimator 42 generates estimates of the SIR and/or MSIR, while the orthogonality factor estimator 44 generates an estimate of the orthogonality factor $\alpha$. The inner-loop power control unit 46 performs inner-loop power control as shown in Figs. 3 or 4 based on the SIR and/or MSIR provided by the SIR estimator 42 and the orthogonality factor $\alpha$ provided by the orthogonality factor estimator 44. The outer-loop power control unit 48 generates the SIR target for the inner-loop power control based on the BLER from the decoder 30.

The present invention may, of course, be carried out in other specific ways than those herein set forth without departing from the scope of the invention as defined by the claims.

**Claims**

1.  A method of controlling the transmit power of a mobile device in a mobile communication network, said method comprising:

    generating power control commands for controlling a transmit power of the mobile device by comparing a received signal quality of a received signal from the mobile device to a signal quality target;
    **characterized by**
    determining a level of self-interference in the received signal from the mobile device; and
    modifying power control command generation when the self-interference is the dominant impairment in the received signal to constrain increases in the mobile device transmit power.

2.  The method according to claim 1 wherein modifying power control command generation when self-interference is the dominant impairment in the received signal comprises generating power control commands to reduce the mobile device transmit power irrespective of the signal quality of the received signal.

3.  The method according to any of claims 1-2, wherein modifying power control command generation when self-interference is the dominant impairment in the received signal comprises generating power control commands to maintain the transmit power of the mobile device at a current transmit power level irrespective of the signal quality of the received signal.

4.  The method according to any of claims 1-3, wherein modifying power control command generation when self-interference is the dominant impairment in the received signal comprises modifying the signal quality target.

5.  The method according to any of claims 1-4, wherein determining a level of self-interference in the received signal comprises determining an orthogonality factor associated with the received signal.

6.  The method according to claim 5, wherein determining an orthogonality factor associated with the received signal comprises estimating self-interference impairment correlations.

7.  The method according to any of claims 5-6, wherein determining an orthogonality factor associated with the received signal comprises estimating a cascaded response.

8.  The method according to any of claims 5-7, further comprising determining that self-interference is the dominant interference by comparing a signal-to-interference ratio of the received signal strength to a first threshold computed based on the orthogonality factor.

9.  The method of claim 8 further comprising:

    comparing the signal quality target to a second threshold computed based on the orthogonality factor; and
    modifying the signal quality target when the signal quality target is greater than the second threshold.

10. The method according to any of claims 1-9, wherein generating power control commands for controlling a transmit power of a mobile device by comparing a received signal quality of a received signal from the mobile device to a target signal quality comprises:

    computing first and second signal-to-interference ratios for the received signal;
    comparing the first signal-to interference ratio to the signal quality target when the second signal-to-interference ratio is below a third threshold; and
    comparing the second signal-to interference ratio to the signal quality target when the second signal-to-interference ratio is above the third threshold.

11. The method according to claim 10, wherein computing first and second signal-to-interference ratios for the received signal comprises computing the second signal-to-interference ratio using a nonparametric overall impairment correlation estimate and a parametric self-interference impairment correlation estimate.

12. The method according to any of claims 1- 11, further comprising providing the level of self-interference to an uplink scheduler for use in determining a data transmission rate for the mobile device.

13. A power control apparatus for mobile communication network for controlling the transmit power of a mobile terminal said power control apparatus comprising:

a signal quality estimator (42) for generating signal quality estimates corresponding to a received signal from the mobile terminal; and

a power control module comprising an inner-loop power control unit (46) to generate power control commands for controlling a transmit power of a mobile device based on said signal quality estimates, said inner-loop power control unit further configured to:

determine a level of self-interference in the received signal from the mobile device; and

modify power control command generation when the self-interference is the dominant impairment in the received signal to constrain increases in the mobile device transmit power.

14. The power control apparatus according to claim 13, wherein the inner-loop power control unit is configured to generate power control commands to reduce the mobile device transmit power irrespective of the signal quality of the received signal.

15. The power control apparatus according to any of claims 13-14, wherein the inner-loop power control unit is configured to generate power control commands to maintain the transmit power of the mobile device at a current transmit power level irrespective of the signal quality of the received signal.

16. The power control apparatus according to any of claims 13-15, wherein the power control module further comprises an outer-loop power control unit configured to modify the signal quality target when self-interference is the dominant impairment in the received signal.

17. The power control apparatus according to any of claims 13-16, wherein the power control module further comprises an orthogonality factor estimator (44) to provide an estimate of an orthogonality factor associated with the received signal to the inner-loop power control unit.

**Patentansprüche**

1. Verfahren zur Regelung der Sendeleistung einer Mobileinrichtung in einem Mobilkommunikationsnetz, wobei das Verfahren umfasst:

Erzeugen von Leistungsregelungsbefehlen zum Regeln einer Sendeleistung der Mobileinrichtung durch Vergleichen einer Empfangssignalqualität eines Empfangssignals von der Mobileinrichtung mit einem Signalqualitätsziel;
**gekennzeichnet durch**
Bestimmen eines Pegels von Eigeninterferenz im Empfangssignal von der Mobileinrichtung; und
Modifizieren der Leistungsregelungsbefehlserzeugung, wenn die Eigeninterferenz die dominierende Beeinträchtigung im Empfangssignal ist, um Erhöhungen der Sendeleistung der Mobileinrichtung zu beschränken.

2. Verfahren nach Anspruch 1, wobei das Modifizieren der Leistungsregelungsbefehlserzeugung, wenn Eigeninterferenz die dominierende Beeinträchtigung im Empfangssignal ist, ein Erzeugen von Leistungsregelungsbefehlen zum Verringern der Sendeleistung der Mobileinrichtung ungeachtet der Signalqualität des Empfangssignals umfasst.

3. Verfahren nach einem der Ansprüche 1 bis 2, wobei das Modifizieren der Leistungsregelungsbefehlserzeugung, wenn Eigeninterferenz die dominierende Beeinträchtigung im Empfangssignal ist, ein Erzeugen von Leistungsregelungsbefehlen zum Halten der Sendeleistung der Mobileinrichtung auf einem aktuellen Sendeleistungspegel ungeachtet der Signalqualität des Empfangssignals umfasst.

4. Verfahren nach einem der Ansprüche 1 bis 3, wobei das Modifizieren der Leistungsregelungsbefehlserzeugung, wenn Eigeninterferenz die dominierende Beeinträchtigung im Empfangssignal ist, ein Modifizieren des Signalqualitätsziels umfasst.

5. Verfahren nach einem der Ansprüche 1 bis 4, wobei das Bestimmen eines Pegels von Eigeninterferenz im Empfangssignal ein Bestimmen eines mit dem Empfangssignal assoziierten Orthogonalitätsfaktors umfasst.

6. Verfahren nach Anspruch 5, wobei das Bestimmen eines mit dem Empfangssignal assoziierten Orthogonalitätsfaktors ein Schätzen von Eigeninterferenz-Beeinträchtigungskorrelationen umfasst.

7. Verfahren nach einem der Ansprüche 5 bis 6, wobei das Bestimmen eines mit dem Empfangssignal assoziierten Orthogonalitätsfaktors ein Schätzen einer kaskadierten Antwort umfasst.

8. Verfahren nach einem der Ansprüche 5 bis 7, ferner umfassend ein Bestimmen, dass Eigeninterferenz die dominierende Interferenz ist, durch Vergleichen eines Signal-Interferenz-Verhältnisses der Empfangssignalstärke mit einer ersten Schwelle, die basierend auf dem Orthogonalitätsfaktor berechnet wird.

9. Verfahren nach Anspruch 8, ferner umfassend:

Vergleichen des Signalqualitätsziels mit einer zweiten Schwelle, die basierend auf dem Orthogonalitätsfaktor berechnet wird; und
Modifizieren des Signalqualitätsziels, wenn das Signalqualitätsziel größer als die zweite Schwelle ist.

10. Verfahren nach einem der Ansprüche 1 bis 9, wobei das Erzeugen von Leistungsregelungsbefehlen zum Regeln einer Sendeleistung der Mobileinrichtung durch Vergleichen einer Empfangssignalqualität eines Empfangssignals von der Mobileinrichtung mit einer Zielsignalqualität umfasst:

Berechnen von ersten und zweiten Signal-Interferenz-Verhältnissen für das Empfangssignal;
Vergleichen des ersten Signal-Interferenz-Verhältnisses mit dem Signalqualitätsziel, wenn das zweite Signal-Interferenz-Verhältnis unter einer dritten Schwelle ist; und
Vergleichen des zweiten Signal-Interferenz-Verhältnisses mit dem Signalqualitätsziel, wenn das zweite Signal-Interferenz-Verhältnis über der dritten Schwelle ist.

11. Verfahren nach Anspruch 10, wobei das Berechnen von ersten und zweiten Signal-Interferenz-Verhältnissen für das Empfangssignals ein Berechnen des zweiten Signal-Interferenz-Verhältnisses unter Verwendung einer nichtparametrischen Gesamtbeeinträchtigungskorrrelationsschätzung und einer parametrischen Eigeninterferenz-Beeinträchtigungskorrelationsschätzung umfasst.

12. Verfahren nach einem der Ansprüche 1 bis 11, ferner umfassend ein Übermitteln des Pegels von Eigeninterferenz an einen Uplink-Scheduler zur Verwendung beim Bestimmen einer Datenübertragungsrate für die Mobileinrichtung.

13. Leistungsregelungsvorrichtung für ein Mobilkommunikationsnetz zum Regeln der Sendeleistung eines mobilen Endgeräts, wobei die Leistungsregelungsvorrichtung umfasst:

einen Signalqualitätsschätzer (42), der Signalqualitätsschätzungen erzeugt, die einem Empfangssignal vom mobilen Endgerät entsprechen; und
ein Leistungsregelungsmodul, das eine Innenschleifen-Leistungsregelungseinheit (46) zum Erzeugen von Leistungsregelungsbefehlen zum Regeln einer Sendeleistung einer Mobileinrichtung basierend auf den Signalqualitätsschätzungen umfasst, wobei die Innenschleifen-Leistungsregelungseinheit ferner konfiguriert ist zum:

Bestimmen eines Pegels von Eigeninterferenz im Empfangssignal von der Mobileinrichtung; und
Modifizieren der Leistungsregelungsbefehlserzeugung, wenn die Eigeninterferenz die dominierende Beeinträchtigung im Empfangssignal ist, um Erhöhung der Sendeleistung der Mobileinrichtung zu beschränken.

14. Leistungsregelungsvorrichtung nach Anspruch 13, wobei die Innenschleifen-Leistungsregelungseinheit so konfiguriert ist, dass sie Leistungsregelungsbefehle zum Verringern der Sendeleistung der Mobileinrichtung ungeachtet der Signalqualität des Empfangssignals erzeugt.

**15.** Leistungsregelungsvorrichtung nach einem der Ansprüche 13 bis 14, wobei die Innenschleifen-Leistungsregelungseinheit so konfiguriert ist, dass sie Leistungsregelungsbefehle zum Halten der Sendeleistung der Mobileinrichtung auf einem aktuellen Sendeleistungspegel ungeachtet der Signalqualität des Empfangssignals erzeugt.

**16.** Leistungsregelungsvorrichtung nach einem der Ansprüche 13 bis 15, wobei das Leistungsregelungsmodul ferner eine Außenschleifen-Leistungsregelungseinheit umfasst, die so konfiguriert ist, dass sie das Signalqualitätsziel modifiziert, wenn Eigeninterferenz die dominierende Beeinträchtigung im Empfangssignal ist.

**17.** Leistungsregelungsvorrichtung nach einem der Ansprüche 13 bis 16, wobei das Leistungsregelungsmodul ferner einen Orthogonalitätsfaktorschätzer (44) umfasst, um eine Schätzung eines mit dem Empfangssignal assoziierten Orthogonalitätsfaktors für die Innenschleifen-Leistungsregelungseinheit bereitzustellen.

**Revendications**

**1.** Procédé de régulation de la puissance de transmission d'un dispositif mobile dans un réseau de communication mobile, ledit procédé comprenant :

la génération de commandes de régulation de puissance pour réguler une puissance de transmission du dispositif mobile en comparant une qualité de signal reçu d'un signal reçu en provenance du dispositif mobile à une cible de qualité de signal ;
**caractérisé par**
la détermination d'un niveau d'auto-interférence dans le signal reçu en provenance du dispositif mobile ; et
la modification d'une génération de commande de régulation de puissance lorsque l'auto-interférence constitue l'affaiblissement dominant du signal reçu pour contraindre des augmentations de la puissance de transmission de dispositif mobile.

**2.** Procédé selon la revendication 1, dans lequel la modification de la génération de commande de régulation de puissance lorsque l'auto-interférence constitue l'affaiblissement dominant du signal reçu comprend la génération de commandes de régulation de puissance pour réduire la puissance de transmission de dispositif mobile indépendamment de la qualité de signal du signal reçu.

**3.** Procédé selon l'une quelconque des revendications 1 et 2, dans lequel la modification de la génération de commande de régulation de puissance lorsque l'auto-interférence constitue l'affaiblissement dominant du signal reçu comprend la génération de commandes de régulation de puissance pour maintenir la puissance de transmission du dispositif mobile à un niveau de puissance de transmission actuel indépendamment de la qualité de signal du signal reçu.

**4.** Procédé selon l'une quelconque des revendications 1 à 3, dans lequel la modification de la génération de commande de régulation de puissance lorsque l'auto-interférence constitue l'affaiblissement dominant du signal reçu comprend la modification de la cible de qualité de signal.

**5.** Procédé selon l'une quelconque des revendications 1 à 4, dans lequel la détermination d'un niveau d'auto-interférence dans le signal reçu comprend la détermination d'un facteur d'orthogonalité associé au signal reçu.

**6.** Procédé selon la revendication 5, dans lequel la détermination d'un facteur d'orthogonalité associé au signal reçu comprend l'estimation de corrélations d'affaiblissement par auto-interférence.

**7.** Procédé selon l'une quelconque des revendications 5 et 6, dans lequel la détermination d'un facteur d'orthogonalité associé au signal reçu comprend l'estimation d'une réponse en cascade.

**8.** Procédé selon l'une quelconque des revendications 5 à 7, comprenant en outre la détermination que l'auto-interférence constitue l'interférence dominante en comparant un rapport de signal sur interférence de la force de signal reçu à un premier seuil calculé sur la base du facteur d'orthogonalité.

**9.** Procédé selon la revendication 8, comprenant en outre :

la comparaison de la cible de qualité de signal à un deuxième seuil calculé sur la base du facteur d'orthogonalité ; et

la modification de la cible de qualité de signal lorsque la cible de qualité de signal est supérieure au deuxième seuil.

10. Procédé selon l'une quelconque des revendications 1 à 9, dans lequel la génération de commandes de régulation de puissance pour réguler une puissance de transmission d'un dispositif mobile en comparant une qualité de signal reçu d'un signal reçu en provenance du dispositif mobile à une qualité de signal cible comprend :

le calcul de premier et deuxième rapports de signal sur interférence pour le signal reçu ;
la comparaison du premier rapport de signal sur interférence à la cible de qualité de signal lorsque le deuxième rapport de signal sur interférence est inférieur à un troisième seuil ; et
la comparaison du deuxième rapport de signal sur interférence à la cible de qualité de signal lorsque le deuxième rapport de signal sur interférence est supérieur au troisième seuil.

11. Procédé selon la revendication 10, dans lequel le calcul des premier et deuxième rapports de signal sur interférence pour le signal reçu comprend le calcul du deuxième rapport de signal sur interférence en utilisant une estimation de corrélation d'affaiblissement global non paramétrique et une estimation de corrélation d'affaiblissement par auto-interférence paramétrique.

12. Procédé selon l'une quelconque des revendications 1 à 11, comprenant en outre la fourniture du niveau d'auto-interférence à un ordonnanceur de liaison montante destiné à être utilisé dans la détermination d'un débit de transmission de données pour le dispositif mobile.

13. Appareil de régulation de puissance pour un réseau de communication mobile destiné à réguler la puissance de transmission d'un terminal mobile, ledit appareil de régulation de puissance comprenant :

un estimateur de qualité de signal (42) pour générer des estimations de qualité de signal correspondant à un signal reçu en provenance du terminal mobile ; et
un module de régulation de puissance comprenant une unité de régulation de puissance de boucle intérieure (46) pour générer des commandes de régulation de puissance afin de réguler une puissance de transmission d'un dispositif mobile sur la base desdites estimations de qualité de signal, ladite unité de régulation de puissance de boucle intérieure étant en outre configurée pour effectuer :

la détermination d'un niveau d'auto-interférence dans le signal reçu en provenance du dispositif mobile ; et
la modification de la génération de commande de régulation de puissance lorsque l'auto-interférence constitue l'affaiblissement dominant du signal reçu pour contraindre des augmentations de la puissance de transmission de dispositif mobile.

14. Appareil de régulation de puissance selon la revendication 13, dans lequel l'unité de régulation de puissance de boucle intérieure est configurée pour générer des commandes de régulation de puissance afin de réduire la puissance de transmission de dispositif mobile indépendamment de la qualité de signal du signal reçu.

15. Appareil de régulation de puissance selon l'une quelconque des revendications 13 et 14, dans lequel l'unité de régulation de puissance de boucle intérieure est configurée pour générer des commandes de régulation de puissance afin de maintenir la puissance de transmission du dispositif mobile à un niveau de puissance de transmission actuel indépendamment de la qualité de signal du signal reçu.

16. Appareil de régulation de puissance selon l'une quelconque des revendications 13 à 15, dans lequel le module de régulation de puissance comprend en outre une unité de régulation de puissance de boucle extérieure configurée pour modifier la cible de qualité de signal lorsque l'auto-interférence constitue l'affaiblissement dominant du signal reçu.

17. Appareil de régulation de puissance selon l'une quelconque des revendications 13 à 16, dans lequel le module de régulation de puissance comprend en outre un estimateur de facteur d'orthogonalité (44) pour fournir une estimation d'un facteur d'orthogonalité associé au signal reçu à l'unité de régulation de puissance de boucle intérieure.

*FIG. 1*

Fig.2

FIG. 3

*FIG. 4*

FIG. 5

$$\hat{\mathbf{h}}, \hat{\mathbf{g}}, \hat{\mathbf{w}}, \hat{\mathbf{R}}_{ISI}, \hat{\mathbf{R}}_n, f_1, f_2$$

40

SIR ESTIMATOR
42

OF ESTIMATOR
44

SIR/MSIR

OF

INNER LOOP
POWER CONTROL
46

TPC

TO UPLOINK
SCHEDULER 60

SIR TARGET

OUTER LOOP
POWER CONTROL
48

BLER

*FIG. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1583256 A

- US 20050201447 A

**Non-patent literature cited in the description**

- **G. E. BOTTOMLEY ; T. OTTOSSON ; Y. E. WANG.** A generalized RAKE Receiver for Interference Suppression. *IEEE Journal on Selected Areas in Communications,* August 2000, vol. 18 (8